Europäisches Patentamt

European Patent Office

Office européen des brevets

(11) Veröffentlichungsnummer: **0 324 964**

**A1**

(19)

(12) # EUROPÄISCHE PATENTANMELDUNG

(21) Anmeldenummer: 88121359.9

(22) Anmeldetag: 21.12.88

(51) Int. Cl.⁴: **B65G 1/04** , **B65G 1/06**

(30) Priorität: 29.12.87 IT 2324787

(43) Veröffentlichungstag der Anmeldung:
26.07.89 Patentblatt 89/30

(84) Benannte Vertragsstaaten:
AT BE CH DE ES FR GB GR IT LI LU NL SE

(71) Anmelder: Henkel Kommanditgesellschaft auf Aktien
Postfach 1100 Henkelstrasse 67
D-4000 Düsseldorf 1(DE)

(72) Erfinder: Carbonaro, Alfredo
Via Seneca, 2
I-20135 Milano(IT)

(74) Vertreter: Jaumann, Paolo
Studio Brevetti Jaumann S.n.c. Piazza
Castello, 2
I-20121 Milano(IT)

(54) **Automatisches dynamisches Lager.**

(57) Das Lager (7) ist unter Verwendung von konventionellen, nicht automatisierten Regalen (5) aufgebaut, wo die einzulagernden Paletten aufeinanderfolgend auf Auflagekonsolen (5) in Lagertunneln (7) aufgelegt werden. Die Lagerregale (5) sind mit Einrichtungen (2,3,4,6) vervollständigt, die sich dazu eignen, sämtliche Ein- und Auslagerungen der Paletten zu automatisieren. Der Transport der Paletten innerhalb eines jeden Tunnels erfolgt mit Hilfe eines besonderen motorisierten Wagens (2), welcher auf Gleisen (4) unterhalb der Auflagekonsolen (5) verfahrbar ist und zwischen der Lade-/Entlade-Station des Tunnels und den Ein-/Auslagerungsstellen für die Paletten hin und her fahren kann. Die Verlagerung des motorisierten Wagens (2) von einem Tunnel zu einem anderen Tunnel kommt mit Hilfe einer Hilfsfähre (3) zustande.

Fig. 7

1) Drahtgefuehrter Wagen (AGV) 2) 'Trolley' 3) 'Trolley Carrier' 4) Trolley-Schiene
5) Auflagekonsolen 6) 'Trolley Carrier' 7) 'Drive-In'

EP 0 324 964 A1

## AUTOMATISCHES DYNAMISCHES LAGER

### 1. STAND DER TECHNIK

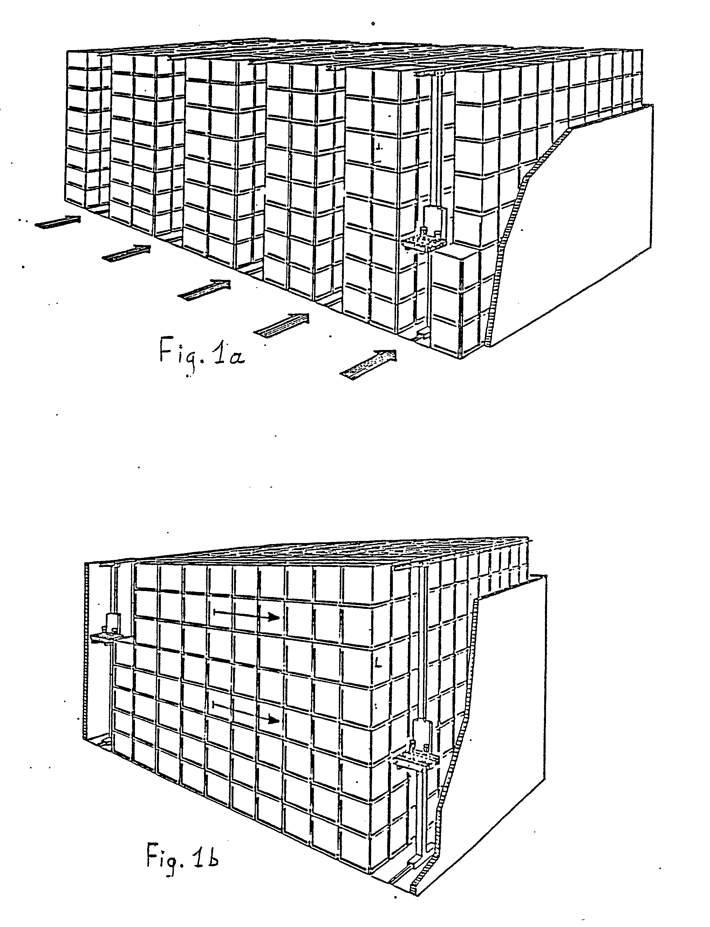

Bei den derzeitigen automatischen Lagerungssystemen lassen sich zwei hauptsächliche Arten unterscheiden (siehe Fig. 1a, 1b):
- "STATISCHE" automatische Lager,
- "DYNAMISCHE" automatische Lager.

### 1.1 "STATISCHES" LAGER

Beim statischen Lager wird die Verladeeinheit bzw. Palette durch ein besonderes Gerät (Regalbediengerät) aufgenommen und an einer durch die Lagerregale bestimmten Lagerungsstelle positioniert. Zu einem späteren zeitpunkt wird die Palette durch das Regalbediengerät von der gleichen Lagerungsstelle entnommen und dem Versand übergeben.

Bei dieser Gestaltungsart beanspruchen die Verkehrsgänge für die Durchfahrt der Regalbediengeräte eine beachtliche Fläche, welche mit der von den Lagerregalen belegten Fläche vergleichbar ist, und die Gesamthöhe der Lagerregale soll der Länge der Verkehrsgänge möglichst entsprechen, damit die Laufzeiten der Regalbediengeräte minimiert werden, was zu sehr (bis zu 25 m) hohen Lagerstrukturen führt, die auch die Decke des Lagers tragen sollen.

Die Notwendigkeit, über eine angemessene Anzahl von Regalbediengeräten zu verfügen, ist ausserdem für hohe Betriebs-, Wartungs- und Investitionskosten verantwortlich. Für Lager mit sehr zahlreichen Artikeln (Ersatzteillager, Grossauslieferungslager, usw.), denen je eine Verladeeinheit (Palette) zugeordnet ist, stellt diese Art der Gestaltung trotzdem noch die technisch und wirtschaftlich bestmögliche Lösung dar.

### 1.2. "DYNAMISCHES" LAGER

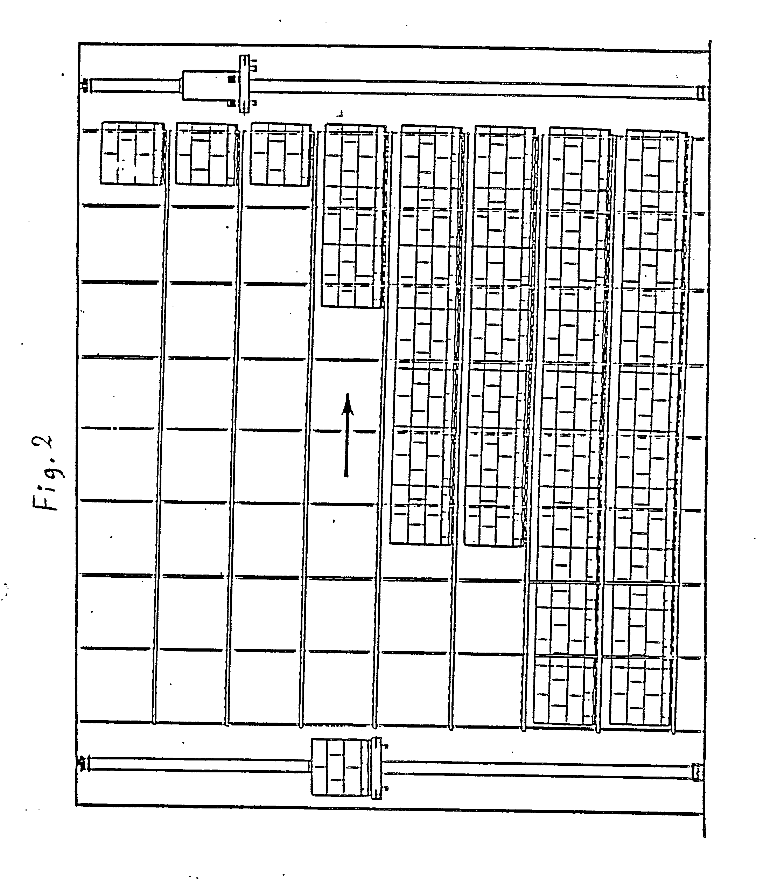

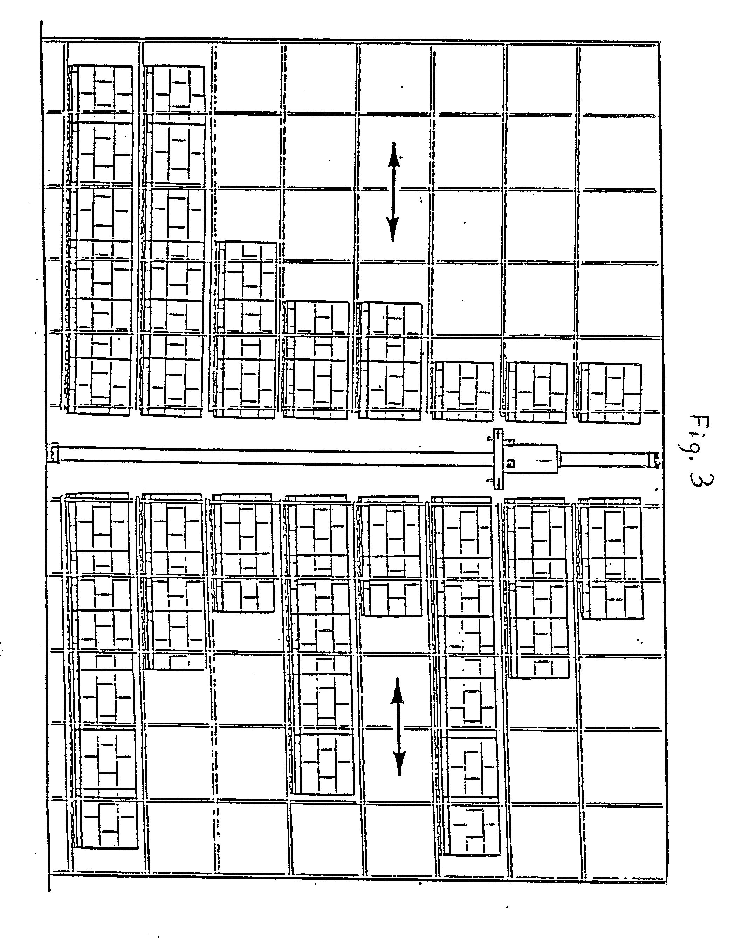

Sind Paletten für Massenerzeugnisse zu lagern, die in beschränkter Anzahl von Artikeln erzeugt werden, so erweist es sich viel vorteilhafter und rationeller, wenn dynamische Lager verwendet werden, wo Paletten mit ein-und demselben Artikel aufeinanderfolgend in langen Lagertunneln eingelagert werden und, in Abhängigkeit von der Reihenfolge der Ein- und Auslagerungen der Paletten, Warenflüsse entweder der Art "FIRST IN - FIRST OUT", oder der Art "LAST IN - FIRST OUT" entstehen (siehe Fig. 2 und 3).

Bei dieser Gestaltungsart ist die nicht ausgenutzte Fläche auf ein bis zwei Verkehrsgänge für die Durchfahrt des bzw. der Regalbediengeräte beschränkt.

Im Vergleich zu statischen Lagern ergeben sich nachstehende Vorteile:
- bessere Ausnutzung der Lagerflächen und -räume,
- beschränkte Anzahl von Regalbediengeräten,
- vereinfachter Betrieb,
- überlegene Palettentransportfähigkeit.

Die Einrichtungen zum Transport der Paletten innerhalb eines jeden Tunnels sind im. allgemeinen mit geneigten, mit Losrollen versehenen bzw. teilweise motorisierten Rollbahnen, Kettenförderern und dergleichen verwirklicht, welche hinsichtlich der Zuverlässigkeit das Hauptproblem der dynamischen Lager darstellen, da sie die Verschiebung von mit Störungen (wie Bretterbrüche, vorstehende Nägel, usw.) behafteten Paletten nicht gewährleisten.

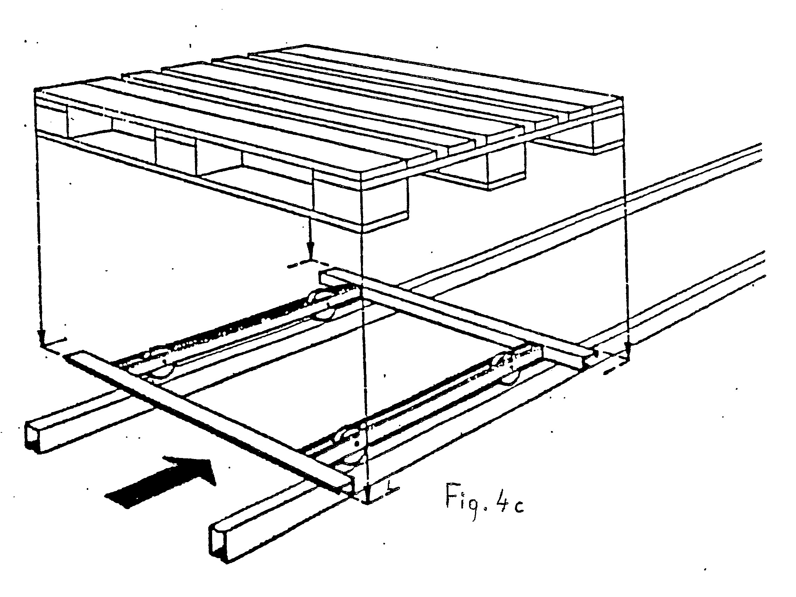

Zur Beseitigung dieses Nachteils werden Systeme verwendet, bei welchen jede Palette mit einer metallischen Unterlage gekuppelt wird, die für eine leichtgängige Verschiebung auf den Rollbahnen ausgelegt ist (siehe Figur 4a), oder der Unterteil einer jeden Palette wird mit einem mit Losrollen versehenen Kleinwagen gekuppelt, der auf in jedem Lagertunnel mit einer etwa 4 %-igen Neigung vorgesehenen Gleisen verfahrbar ist.

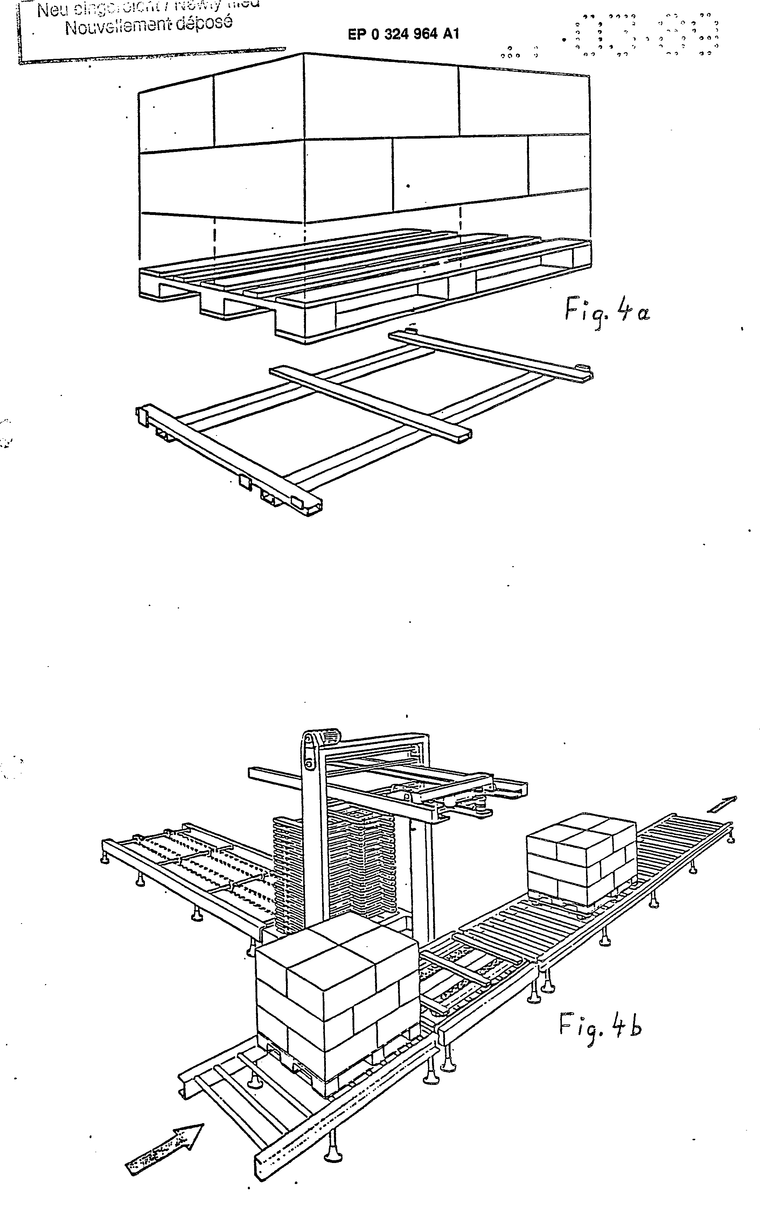

Die erwähnten Systeme sind zwar wirksam, bedingen jedoch eine Erschwerung des Betriebes und eine Erhöhung der Wartungskosten und jedenfalls auch der Anlagekosten, wobei die Anlage, neben den Lagerungsstrukturen und den Regalbediengeräten, eine der maximalen Anzahl von lagerungsfähigen Paletten entsprechende Anzahl von metallischen Unterlagen bzw. Kleinwagen und eine Einrichtung zur gegenseitigen Kupplung und Entkupplung der Paletten, einerseits, und der metallischen Unterlagen bzw. Kleinwagen, andererseits, benötigt (siehe Figuren 4b, 4c).

### 2. VORGESCHLAGENES "DYNAMISCHES" LAGER

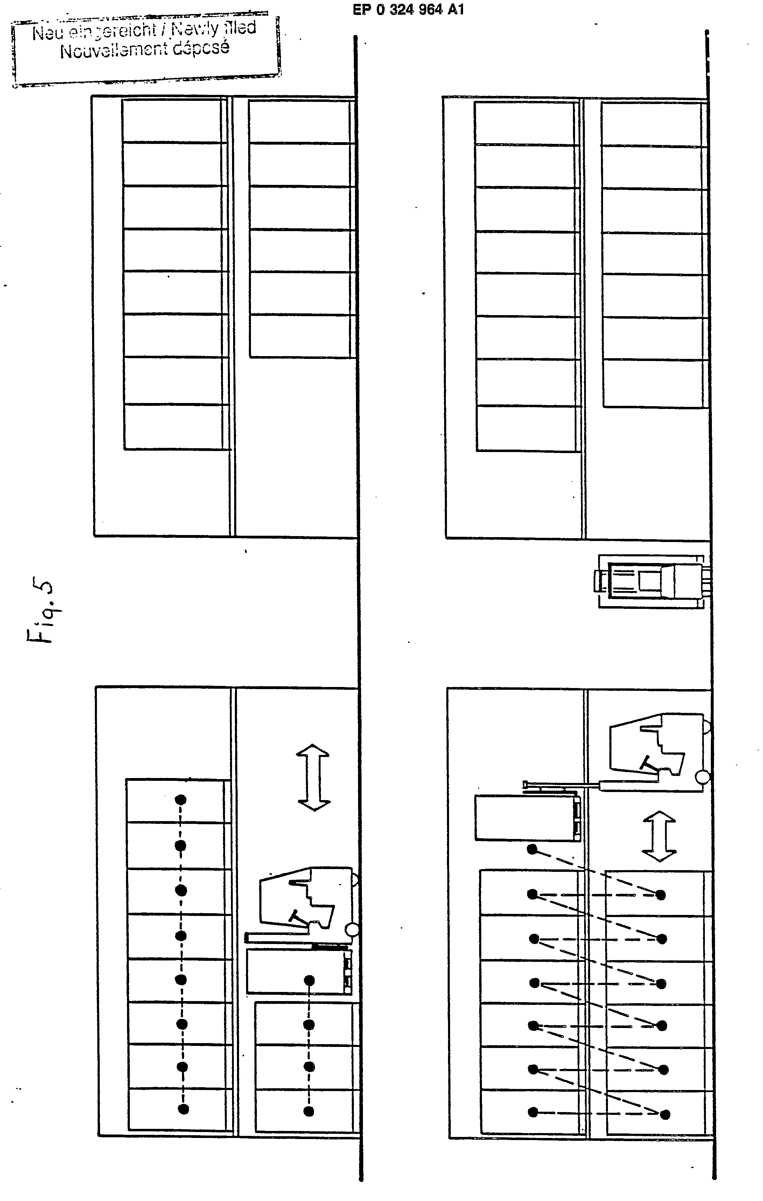

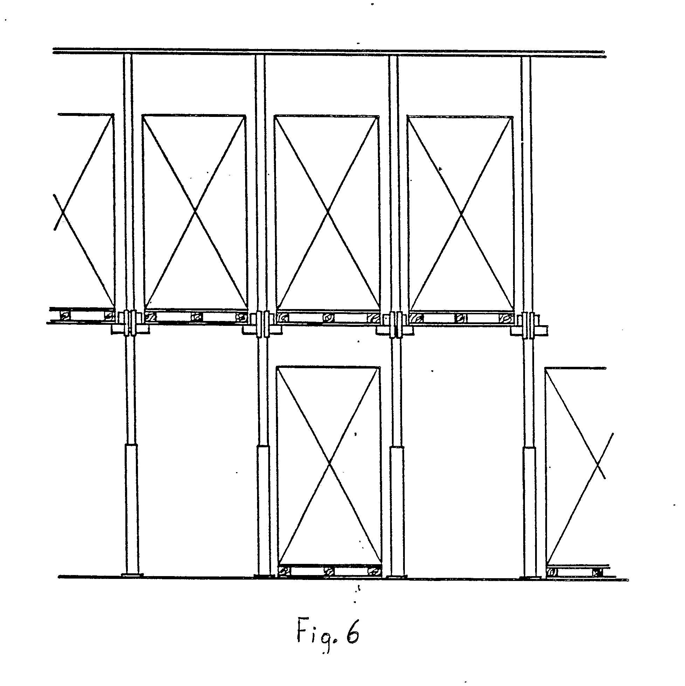

Das nachstehend erläuterte Lagerungssystem beruht auf der Verwendung von konventionellen, nicht automatisierten, allgemein mit "Drive-in" bezeichneten Regalen (siehe Figuren 5 und 6), die nach einem vorbestimmten Lay-out angeordnet und mit Einrichtungen vervollständigt sind, welche sich dazu eignen, sämtliche Ein- und Auslagerungsvorgänge der Paletten zu automatisieren.

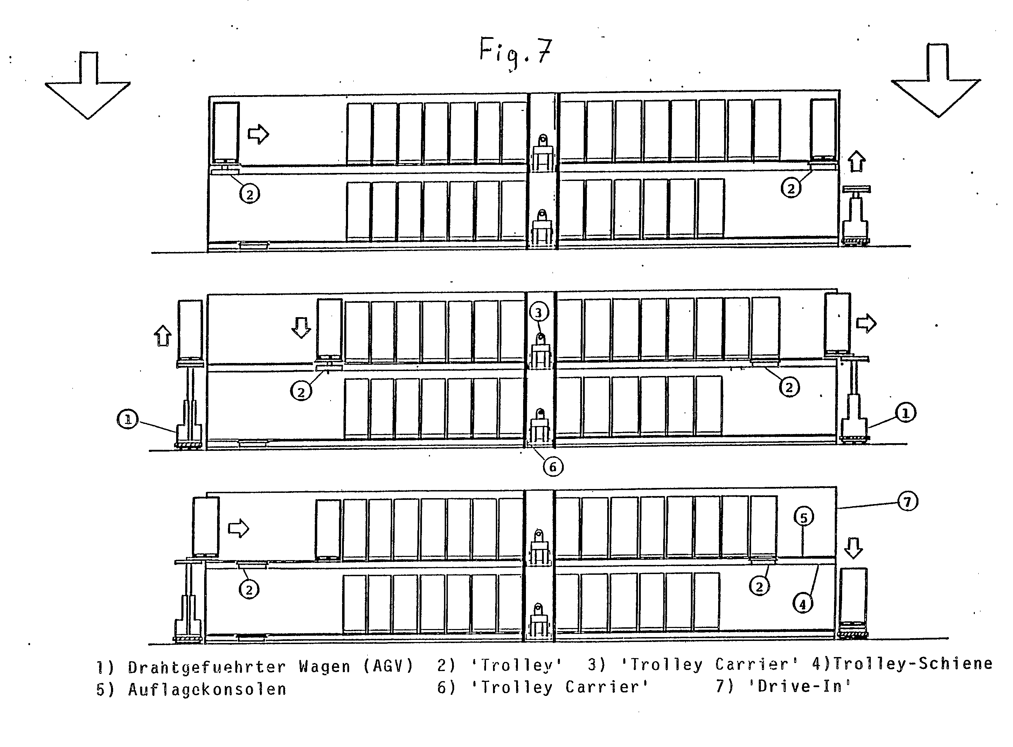

Im Unterschied zu erhältlichen bzw. bekannten, dynamischen Lagern wird der Palettentransport innerhalb eines jeden Tunnels mit Hilfe eines besonderen, motorisierten Wagens (Trolleys) bewerkstelligt, welcher auf Gleisen unterhalb der Auflagekonsolen verfahrbar ist und zwischen der Lade-/Entlade-Station des Tunnels und den Ein-/Auslagerungsstellen für die Paletten hin und her fahren kann (siehe Figur 7).

Jeder "Trolley" ist für die Bedienung mehrerer Tunnels eingerichtet.

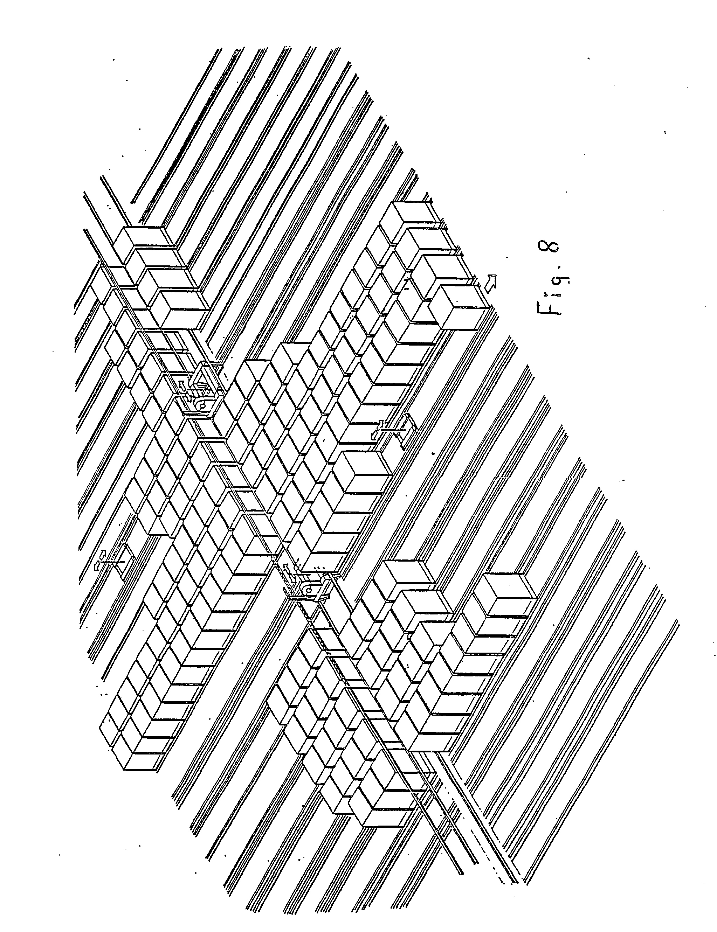

Die Verlagerung des "Trolleys" von einem Tunnel zu einem anderen Tunnel kommt mit Hilfe einer Hilfsfähre (Trolley Carrier) zustande, welche die Aufgabe hat, längs eines gegenüber der Tunnelachse querverlaufenden Ganges zu fahren (siehe Figur 8).

Jeder "Trolley" ist dem entsprechenden "Trolley Carrier" zugeordnet und die Anzahl der aus "Trolley + Trolley Carrier" bestehenden Einheiten hängt von der Grösse des Lagers, von der Anzahl der Lagerebenen und von der Anzahl der gleichzeitig an Ein- und Auslagerungsvorgängen beteiligten Tunneln ab.

## 3. ZEICHNUNGEN

Es zeigen:

Fig. 1a ein "statisches" automatisches Lager bekannter Art,

Fig. 1b eib "dynamisches" automatisches Lager bekannter Art,

Fig. 2 ein Beispiel für ein "dynamisches" automatisches Lager mit dem bekannten Warenfluss der Art "FIRST IN - FIRST OUT",

Fig. 3 ein Beispiel für ein "dynamisches" automatisches Lager mit dem bekannten Warenfluss der Art "LAST IN - FIRST OUT",

Fig. 4a eine Einzelheit eines Beispiels für eine Palette, die auf einer bekannten, metallischen Laufunterlage transportierbar ist,

Fig. 4b eine Einzelheit eines Beispiels für Paletten, die auf bekannten Gleitbahnen transportierbar sind,

Fig. 4c eine Einzelheit eines Beispiels für eine Palette, die auf einem bekannten Kleinwagen mit Losrädern transportierbar ist,

Fig. 5 ein Beispiel für Regale der bekannten Art "Drive-in",

Fig. 6 ein weiteres Beispiel für Regale der bekannten Art "Drive-in",

Fig. 7 ein Beispiel für ein dynamisches Lager nach der Erfindung,

Fig. 8 die Verlagerung eines "Trolleys" von einem Tunnel zu einem anderen Tunnel in einem dynamischen Lager nach der Erfindung,

Fig. 9a, 9b, 9c ein Beispiel für einen "Trolley" eines dynamischen Lagers nach der Erfindung,

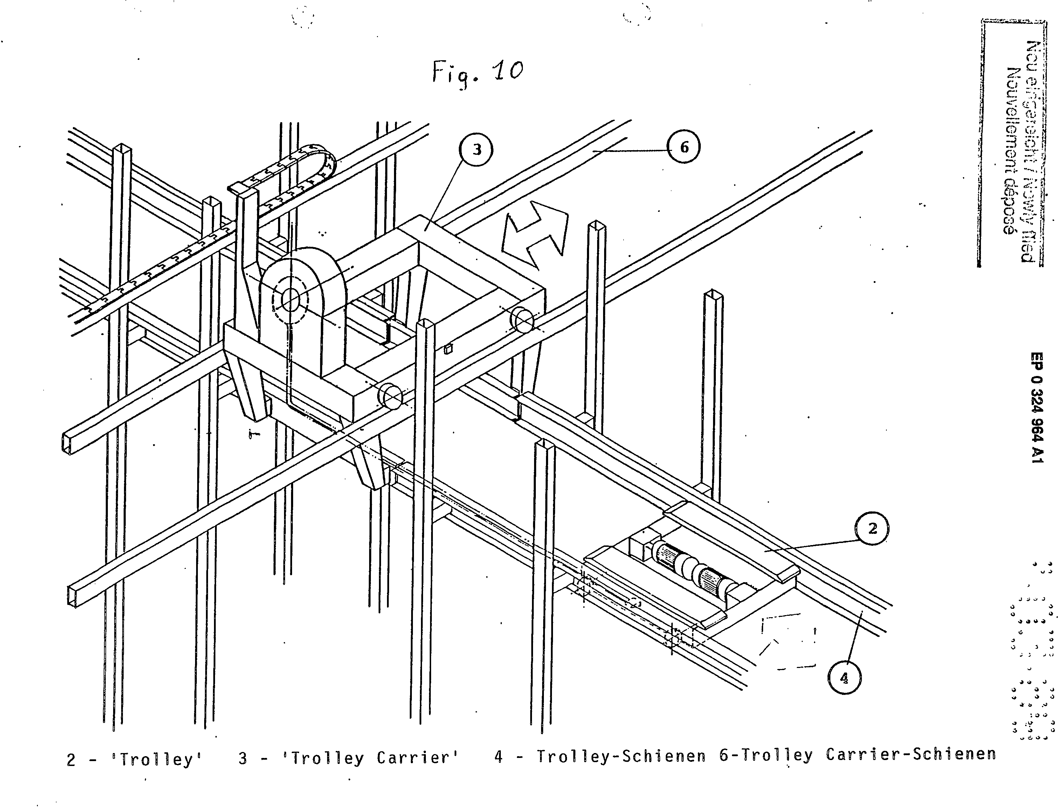

Fig. 10 ein Beispiel für einen "Trolley" und einen zugeordneten "Trolley Carrier" in einem dynamischen Lager nach der Erfindung,

Fig. 11 ein Beispiel für eine Gleisanordnung für "Trolley" in einem dynamischen Lager nach der Erfindung,

Fig. 12 den Ablauf eines Einlagerungsvorganges in einem dynamischen Lager nach der Erfindung und

Fig. 13 den Ablauf eines Auslagerungsvorganges in einem dynamischen Lager nach der Erfindung.

## 4. BESCHREIBUNG VON BEISPIELEN

Nachstehend werden erfindungsgemässe Ausführungsbeispiele beschrieben, auf welche die Erfindung jedoch nicht beschränkt ist.

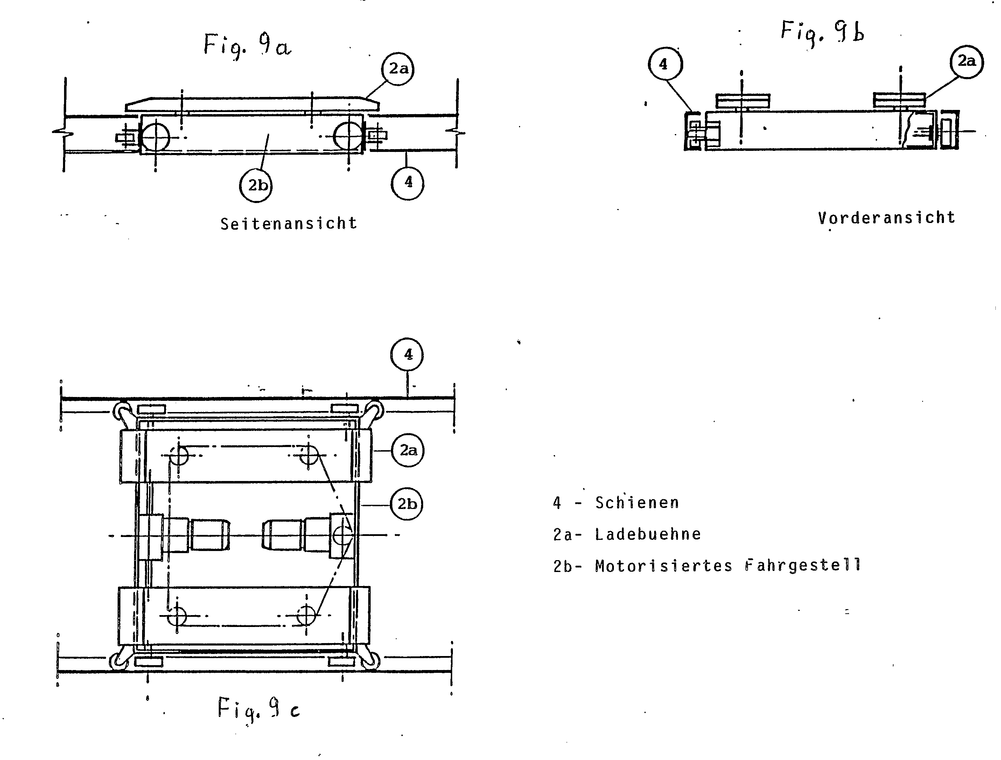

### 4.1. TROLLEY (siehe Figuren 9a, 9b, 9c)

Der "Trolley" besteht aus einem Fahrgestell mit 4 äusseren Rädern (darunter 2 treibenden Rädern), die auf 2 Schienen laufen, deren Länge der Länge des Lagertunnels entspricht.

Im Fahrgestell ist eine Ladebühne mit den Abmessungen 1000 x 1000 x 100 mm gelagert, die mit einem Hubantrieb für eine vertikale und planparallele Verschiebung um etwa 60 mm ausgerüstet ist.

Der "Trolley" vermag zweierlei Bewegungen auszuführen:
- eine horizontale Bewegung längs der Schienen,
- eine vertikale Bewegung der oberen Ladebühne zur Ein- bzw. Auslagerung der Paletten.

Der "Trolley" ist mit Fühlern ausgerüstet, welche die richtige Positionierung der Palette auf der Ladebühne überwachen.

### 4.2.TROLLEY CARRIER

Der "Trolley Carrier" ist ein Wagen mit den Abmessungen 1200 x 1200 x 1000 mm, welcher zur Ausführung einer horizontalen Bewegung auf einem Gleis motorisiert ist: er besitzt Fühler zum Aufsuchen des zu bedienenden Tunnels, sowie eine motorisierte Rückspulvorrichtung für das elektrische Kabel, das der Speisung und dem Signalaustausch mit dem entsprechenden "Trolley" dient.

Schliesslich ist am Unterteil ein Gleisabschnitt angebaut, der die gleichen Konstruktionsmerkmale wie die längs der Lagertunnel verlegten Gleise aufweist.

Die fluchtende Ausrichtung und Aneinanderbringung der Gleisachsen wird durch mechanische Kupplung erziehlt.

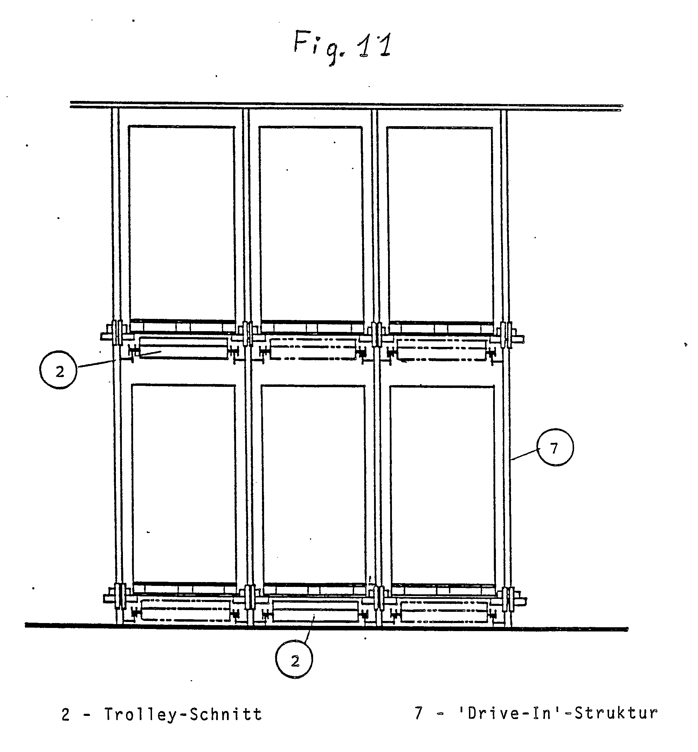

## 4.3. LAGERREGAL (siehe Figur 11)

Zur Verwendung kommt die konventionelle Struktur der Art "Drive-in", angeordnet nach einem gedrängten Lay-out mi 2 Bedienungsgängen und einem 1200 mm breiten Zentralgang.

An den Auflagekonsolen eines jeden Tunnels werden zwei Schienen mit geeignetem Querschnitt verlegt, um die Verlagerung des "Trolleys" zu ermöglichen.

## 4.4. ZENTRALE VERWALTUNGSEINHEIT

Diese Einheit übernimmt die dauernde Überwachung des Lagerbestandes und verarbeitet hierzu sämtliche Informationen über die eingelagerten Waren, getrennt nach Artikel, Herstellungsdatum und Lagerstelle, und liefert ausserdem die jeweiligen Adressen sowohl an das ausserhalb der Lagerregale wirkende, automatische Transportsystem (drahtgeführte Wagen AGV = Automatic Guided Vehicles), als auch an die Gesamtheit der innerhalb der Lagerregale wirkenden Gruppen "Trolley + Trolley Carrier".

## 5. TYPISCHES ARBEITSSPIEL DES VORGESCHLAGENEN SYSTEMS

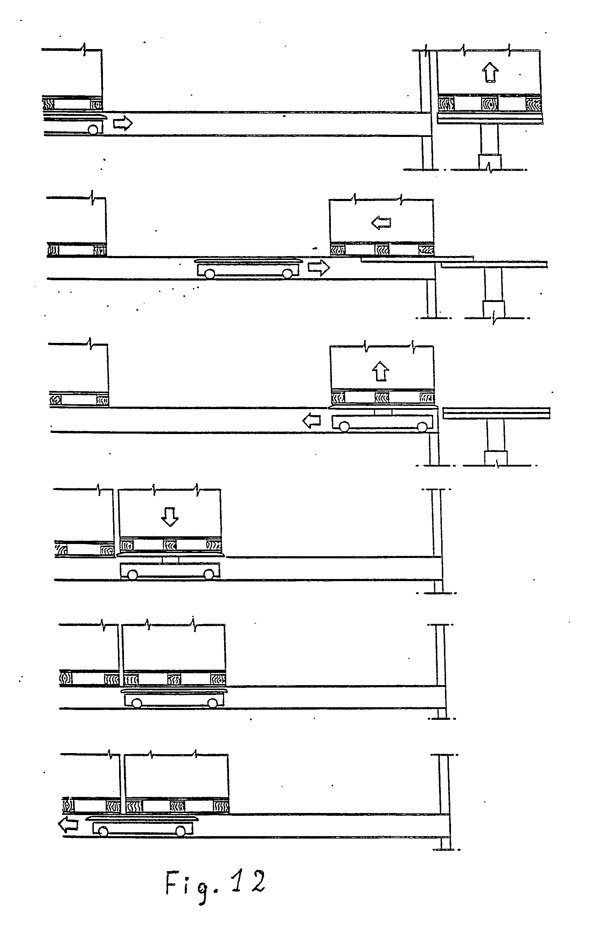

## 5.1. EINLAGERUNGSVORGANG (siehe Figur 12)

Die aus Fertigungsabteilungen oder von aussen kommenden Paletten werden mittels drahtgeführte Wagen (Automatic Guided Vehicles) zu bzw. an den Bestimmungskopfstationen der Lagertunnel verlagert bzw. abgelagert.

Der Bestimmungtunnel wird von Seiten der zentralen Verwaltungseinheit nach Massgabe der Art des Artikels (Code) und des Füllungsgrades jedes einzelnen Tunnels bestimmt.

Dasselbe vom drahtgeführten Wagen AGV empfangene Adressiersignal wird dem "Trolley Carrier" übermittelt, der den mitgetragenen "Trolley" bis zum gewünschten Tunnel verlagert und ihn darin hineinführt.

Der "Trolley" läuft mit gesenkter Ladebühne durch den ganzen Tunnel hindurch, kommt an der Kopfstation - nach vorheriger Zentrierung zur Palette - unter der vorher abgelagerten Palette zu liegen, hebt die Ladebühne, übernimmt dabei die Palette und beginnt eine Verlagerung bis in die Nähe der ersten im Tunnel bereits lagernden Palette.

Diese Annäherung erfolgt in ihrer Endphase mit verminderter Geschwindigkeit bis sich die beiden Paletten berühren; nach erfolgter Berührung senkt der "Trolley" seine Ladebühne bis unterhalb der Höhe der Auflagekonsolen. Er verbleibt sodann in dieser Stellung und, wenn er innerhalb eines vorbestimmten Zeitraumes einen weiteren Einlagerungsbefehl erhält, dann fährt er erneut zur Kopfstation des Tunnels, um das soeben beschriebene Arbeitsspiel zu wiederholen; gegenteiligenfalls kehrt er zu Bord des "Trolley Carriers" zurück und verbleibt in Erwartung einer weiteren Eingabe von Seiten der zentralen Verwaltungseinheit

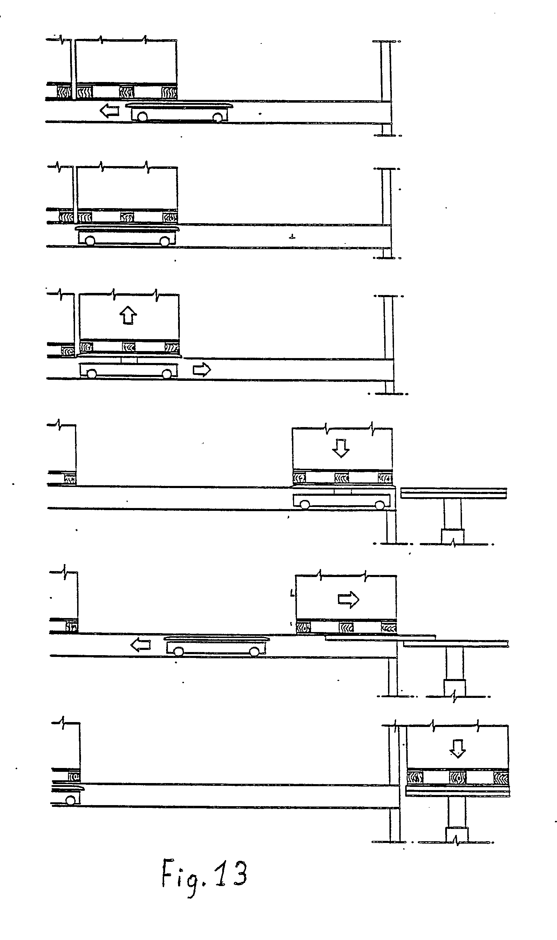

## 5.2. AUSLAGERUNGSVORGANG (siehe Figur 13)

Die zentrale Verwaltungseinheit erhält in Batch oder kontinuierlich von Host und/oder von einer Bedienungstastatur die Liste der auszulagernden Paletten, getrennt nach Artikel und in der gewünschten Versandreihenfolge.

Die Auslagerungs-Eingabe erreicht den bzw. die "Trolley Carriers" und diese fahren bis zu dem bzw. den Bestimmungstunneln.

Der "Trolley" ist somit in der Lage, in den Tunnel in Richtung des entgegengesetzten Endes hinein zu fahren bis unterhalb der ersten Palette der auf den Auflagekonsolen des Lagerregals lagernden Palettenreihe.

Nach gegenseitiger Zentrierung zwischen Palette und Ladebühne, hebt er letztere und fährt bis zur Kopfstation des Tunnels, wo er die Palette absetzt, welche sodann von einem drahgeführten Wagen AGV übernommen wird; schliesslich kehrt er zurück und legt sich dabei entweder unter die folgende, auszulagernde Palette oder kehrt, im Falle einer anderen Eingabe, zu Bord des "Trolley Carriers" zurück, welcher für weitere in anderen Tunneln zu erfüllenden Aufgaben zur Verfügung bleibt.

## 6. VORTEILE DES VORGESCHLAGENEN SYSTEMS

## 6.1. NUTZUNG BESTEHENDER LAGERREGALE

Überall dort wo, in Anbetracht der Eigenschaften der zu lagernden Waren und der Gegebenheiten der verfügbaren Lagerfläche, Strukturen der Art DRIVE-IN bereits bestehen bzw. geplant sind, bietet das vorgeschlagene System die Möglichkeit einer nachträglichen Automatisierung ohne wesentliche Änderungen der ursprünglichen Lagerregale.

## 6.2. SCHRITTWEISER UMBAU

Sind bereits in Betrieb befindliche und von Flurförderzeug-Fahrern bediente Lagerstrukturen vorhanden, so können die zur Automatisierung dienenden Einrichtungen (Gleise, Trolley + Trolley Carrier, Steuereinrichtungen) zunächst für eine beschränkte Anzahl von Lagertunneln installiert werden, wobei also ein schrittweiser Übergang von einem manuellen zu einem vollkommen automatischen Betrieb ermöglicht wird.

## 6.3. ANPASSUNGSFÄHIGKEIT

Bei bekannten, dynamischen Lagern sind sämtliche dem Palettentransport von und zu den Lagertunneln dienenden Mittel mit der gesamten Automation integriert und starr verknüpft.

Folglich wirkt sich eine Störung eines dieser Mittel (Regalbediengeräte, Rollbahnen zum Beladen und Abladen der Regalbediengeräte, usw.) auf die Funktion der gesamten Anlage aus.

Demgegenüber weist das vorgeschlagene System eine Gesamtheit bestehend aus N EINHEITEN "TROLLEY + TROLLEY CARRIER" auf, wovon jede in denjenigen Tunneln tätig ist, in welchen eine Ein- bzw. Auslagerungsaufgabe zu erfüllen ist. Ist eine dieser Einheiten gestört, so bleibt das gesamte "LAGER", lediglich mit' Ausnahme des durch den ausgefallenen Trolley betroffenen Tunnel, weiterhin betriebsfähig, wobei die Gesamtleistung nur um ein N-tel vermindert wird.

**Ansprüche**

1.- Unter Verwendung von konventionellen, nicht automatisierten, allgemein mit "Drive-in" bezeichneten Regalen aufgebautes automatisches dynamisches Lager, wo die einzulagernden Paletten aufeinanderfolgend auf Auflagekonsolen aufgelegt werden und, in Abhängigkeit von der Reihenfolge der Ein- und Auslagerungen der Paletten, Warenflüsse entweder der Art "FIRST IN - FIRST OUT", oder der Art "LAST IN - FIRST OUT" entstehen, dadurch gekennzeichnet, dass der Transport der Paletten eines jeden Tunnels mit Hilfe eines hierfür speziell vorgesehenen, motorisierten Wagens (sogenannten Trolleys) erfolgt, welcher auf Gleisen unterhalb der Auflagekonsolen verfahrbar ist und zwischen der Lade-/Entlade-Station und den Ein-/Auslagerungsstellen hin /und her fahren kann.

2.- Dynamisches Lager nach Anspruch 1, dadurch gekennzeichnet, dass jeder "Trolley" für die Bedienung mehrerer Tunnels eingerichtet ist.

3.- Dynamisches Lager nach Anspruch 2, dadurch gekennzeichnet, dass die Verlagerung des "Trolleys" von einem Tunnel zu einem anderen Tunnel mit Hilfe einer Hilfsfähre (eines sogenannten Trolley Carriers) zustande kommt, welche die Aufgabe hat, längs eines gegenüber der Tunnelachse querverlaufenden Ganges zu fahren.

4.- Dynamisches Lager nach Anspruch 3, dadurch gekennzeichnet, dass jeder "Trolley" dem entsprechenden "Trolley Carrier" zugeordnet ist, und dass, in Abhängigkeit von der Grösse des Lagers, von der Anzahl von Lagerebenen und von der Anzahl von gleichzeitig an Ein- und Auslagerungsvorgängen beteiligten Tunneln, das Lager mit einer Anzahl von aus "Trolley + Trolley Carrier" bestehenden Einheiten versehen ist.

5.- Dynamisches Lager nach einem oder mehreren der vorangehenden Ansprüche, dadurch gekennzeichnet, dass jeder "Trolley" einen Rahmen mit vier äusseren Rädern besitzt, zu welchen zumindest zwei treibende Räder zählen und welche auf zwei Schienen laufen, deren Länge der Länge des Lagertunnels entspricht.

6.- Dynamisches Lager nach Anspruch 5, dadurch gekennzeichnet, dass innenseitig im Rahmen des "Trolleys" eine mit einem Antrieb für eine vertikal und in einer Ebene durchführbare Verschiebung versehene Verladebühne gelagert ist, so dass der "Trolley", neben der horizontalen Verschiebung in Längsrichtung der Gleise, eine vertikale Verschiebung der genannten Verladebühne zur Übernahme oder Übergabe der Paletten veranlassen kann.

7.- Dynamisches Lager nach Anspruch 6, dadurch gekennzeichnet, dass der "Trolley" mit Fühlern versehen ist, welche sich dazu eignen, die richtige Positionierung der Palette auf der Verladebühne zu überwachen.

8.- Dynamisches Lager nach einem oder mehreren der vorangehenden Ansprüche, insbesondere nach Anspruch 3, dadurch gekennzeichnet, dass der "Trolley Carrier" ein für eine horizontale Verschiebung auf einem Gleis motorisierter Wagen ist und einen Gleisabschnitt trägt, welcher jeweils auf eines derjenigen Gleise fluchtend ausrichtbar ist, die längs der vom jeweiligen "Trolley" bedienten Lagertunnel verlegt sind, und dazu dient, diesen "Trolley" von einem Tunnel zu einem anderen Tunnel zu verlagern.

9.- Dynamisches Lager nach Anspruch 8, dadurch gekennzeichnet, dass der "Trolley Carrier" Fühler zum Aufsuchen des zu bedienenden Tunnels besitzt.

10.- Dynamisches Lager nach einem oder mehreren der vorangehenden Ansprüche, gekennzeichnet durch eine zentrale Verwaltungseinheit, welche den Lagerbestand dauernd überwacht und die jeweiligen Adressen sowohl an das automatische, ausserhalb des Lagerregals wirkende Transportsystem, als auch an die aus "Trolley + Trolley Carrier" bestehenden, innerhalb des Regals wirkenden Einheiten liefert.

Fig. 1a

Fig. 1b

Fig. 2

Fig. 3

Fig. 4a

Fig. 4b

Fig. 4c

Fig.5

EP 0 324 964 A1

Fig. 6

# Fig. 7

1) Drahtgefuehrter Wagen (AGV)  2) 'Trolley'   3) 'Trolley Carrier'  4)Trolley-Schiene

5) Auflagekonsolen          6) 'Trolley Carrier'        7) 'Drive-In'

Neu eingereicht / Newly filed
Nouvellement déposé

EP 0 324 964 A1

Fig. 8

Fig. 9a

(2a)

(2b)    (4)

Seitenansicht

Fig. 9b

(4)                          (2a)

Vorderansicht

(4)

(2a)

(2b)

Fig. 9c

4 - Schienen

2a- Ladebuehne

2b- Motorisiertes Fahrgestell

EP 0 324 964 A1

Fig. 10

2 - 'Trolley'   3 - 'Trolley Carrier'   4 - Trolley-Schienen 6-Trolley Carrier-Schienen

EP 0 324 964 A1

## Fig. 11

2 - Trolley-Schnitt          7 - 'Drive-In'-Struktur

Fig. 12

Fig. 13

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | AU-B- 472 735 (CONSTRUCTIONS MILLS. K) * Insgesamt * --- | 1-10 | B 65 G 1/04 B 65 G 1/06 |
| X | EP-A-0 197 448 (VÄSTSVENSKA KYLHUS AG) * Insgesamt * --- | 1-10 | |
| X | FR-A-2 137 081 (CONSTRUCTIONS MILLS. K) * Insgesamt * --- | 1-10 | |
| X | AU-B- 449 383 (MITSUBISHI) * Insgesamt * ----- | 1-10 | |
| | | | **RECHERCHIERTE SACHGEBIETE (Int. Cl.4)** B 65 G |

Der vorliegende Recherchenbericht wurde für alle Patentansprüche erstellt

| Recherchenort | Abschlußdatum der Recherche | Prüfer |
|---|---|---|
| DEN HAAG | 20-04-1989 | VAN ROLLEGHEM F.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

................................................................
& : Mitglied der gleichen Patentfamilie, übereinstimmendes Dokument

EPO FORM 1503 03.82 (P0403)